# EUROPÄISCHE PATENTSCHRIFT

(11) **EP 2 221 138 B1**
(45) Veröffentlichungstag und Bekanntmachung des Hinweises auf die Patenterteilung: **11.12.2013**
(21) Anmeldenummer: 10150890.1
(22) Anmeldetag: 15.01.2010
(51) Int. Cl.: B23K 26/04, B23K 26/08, B23K 26/40, B23K 26/06, B28D 5/00, C03C 23/00, B23K 26/18

(54) **Verfahren und Vorrichtung zum Separieren eines Halbleiter-Wafers von einem Halbleiterkristall durch Erzeugung von Schwachstellen in dem Halbleiterkristall**
Method of and device for separating a semiconductor wafer from a semiconductor crystal by creation of weak points inside the semiconductor crystal
Procédé et dispositif de séparation d'une tranche de silicium semi-conductrice d'un cristal semi-conducteur par création de points faibles à l'intérieur du cristal semi-conducteur

(30) Priorität: 16.01.2009 DE 102009005303
(43) Veröffentlichungstag der Anmeldung: 25.08.2010
(73) Patentinhaber: BIAS Bremer Institut für angewandte Strahltechnik GmbH, 28359 Bremen (DE)
(72) Erfinder: Hildebrand, Alexander, Dipl.-Ing. (FH), 28359 Bremen (DE); Bergmann, Ralf, Prof. Dr., 28359 Bremen (DE)
(74) Vertreter: Tappe, Udo

(56) Entgegenhaltungen:
- JP-A- S62 207 592
- JP-A- 2001 341 122
- JP-A- 2002 239 766
- JP-A- 2006 142 556
- US-A1- 2004 002 199
- US-A1- 2005 011 860
- US-A1- 2007 051 706

## Beschreibung

Die Erfindung betrifft ein Verfahren zum Separieren eines Halbleiter-Wafers von einem Halbleiterkristall, bei dem ein Laserstrahl in den Halbleiterkristall eingekoppelt wird, der Laserstrahl in einer vorgegebenen Tiefe in dem Halbleiterkristall in einem Fokus fokussiert wird, im Bereich des Fokus in dem Halbleiterkristall eine Schwachstelle durch den Laserstrahl erzeugt wird, und eine zum Ablösen des Halbleiter-Wafers von dem Halbleiterkristall hinreichende Anzahl von unterschiedlich positionierten Schwachstellen in einer Trennebene erzeugt wird. Außerdem betrifft die Erfindung eine Vorrichtung zum Separieren eines Halbleiter-Wafers von einem Halbleiterkristall mit einem Laser zum Erzeugen eines Laserstrahls, mit einer Fokussiereinrichtung zum Fokussieren des Laserstrahls in einem Fokus in einer vorgegebenen Tiefe in dem Halbleiterkristall, und mit einer Positioniereinrichtung zum Positionieren des Laserstrahls zum Erzeugen einer zum Ablösen des Halbleiter-Wafers von dem Halbleiterkristall hinreichenden Anzahl von Schwachstellen.

Ein solches Verfahren und eine solche Vorrichtung sind aus der Druckschrift JP 2001 341122 A bekannt.

Die Druckschrift JP 2002 239766 A zeigt ein Verfahren und eine Vorrichtung zum Bohren eines Loches in ein metallisches Material mittels eines Lasers.

Die Druckschrift US 2004/002199 A1 zeigt schließlich ein Verfahren zum Laserschneiden.

Es ist bekannt, einen Halbleiter-Wafer von einem Halbleiterkristall mittels eines Sägeverfahrens abzutrennen. Dabei wird der Halbleiter-Wafer mittels eines Sägeblattes oder einer Drahtsäge von dem Halbleiterkristall separiert. Als Sägeblatt wird beispielsweise eine Innenlochsäge mit einer Sägescheibe verwendet, die ein Innenloch aufweist, das nur wenig größer ist als der Durchmesser des Halbleiterkristalls und dessen Kanten das Sägeblatt bilden. Bei Drahtsägeverfahren wird ein Draht durch den Halbleiterkristall geführt, wodurch der Halbleiterkristall in Wafer zersägt wird.

Nachteilig ist hierbei, dass diese Verfahren zum Separieren eines Halbleiter-Wafers von einem Halbleiterkristall nicht die Separierung von Wafem mit einer sehr dünnen Schichtdicke, beispielsweise von weniger als 100 µm, erlauben. Geringere Schichtdicken sind in der Regel nicht möglich, da ansonsten die Gefahr besteht, dass die dünnen Halbleiter-Wafer beim Separieren von dem Halbleiterkristall beschädigt werden. Des Weiteren ist nachteilig, dass sowohl bei der Innenlochsäge als auch bei der Drahtsäge eine minimale Schnittkantenbreite erforderlich ist, wodurch beim Separieren eines einzelnen Halbleiter-Wafers eine Schichtdicke von etwa 100 µm bis 300 µm an Halbleitermaterial verloren geht. Somit gehen erhebliche Mengen an Halbleitermaterial verloren, welches zu hohen Kosten bei der Halbleiter-Wafer-Herstellung führt.

Weiter ist von Nachteil, dass zur Herstellung von dünnen Halbleiter-Wafern, insbesondere mit einer Dicke von weniger als 100 µm, weitere Verfahrensschritte notwendig sind. Dünne Halbleiter-Wafer lassen sich nur aufgrund nachfolgender Schleif- und/oder Polierprozesse herstellen. Dies ist jedoch nicht nur mit einem zusätzlichen Zeit- und Kostenaufwand, sondern auch mit einem weiteren Materialverlust verbunden. Ferner ist nachteilig, dass die Schnittflächen bei den bekannten Sägeverfahren nicht die erforderliche Oberflächenqualität gewährleisten. Somit müssen die Oberflächen nachträglich poliert werden, welches zu einem zusätzlichen Zeit- und Kostenaufwand sowie zu weiteren Materialverlusten führt.

Daher ist das der Erfindung zu Grunde liegende Problem, ein Verfahren und eine Vorrichtung der eingangs genannten Art derart weiterzuentwickeln, dass ein Halbleiter-Wafer mit einem deutlich geringeren Materialverlust von einem Halbleiterkristall separierbar ist, wobei zugleich eine bessere Oberflächenqualität an den Schnittflächen gewährleistet sein sollte.

Das der Erfindung zugrunde liegende Problem wird bei einem Verfahren der eingangs genannten Art dadurch gelöst, dass vor dem Einkoppeln des Laserstrahls in den

Halbleiterkristall und/oder den Halbleiter-Wafer ein Trägermaterial auf den abzulösenden Halbleiter-Wafer des Halbleiterkristalls aufgebracht wird, wobei das zwischen dem Halbleiterkristall und dem Laser angeordnete Trägermaterial zugleich als ein Lichteinkoppelmittel zum Erhöhen der numerischen Apertur und/oder zum Reduzieren von Reflexionsverlusten eingesetzt wird, wobei als Lichteinkoppelmittel eine Folic eingesetzt wird. Weiter wird das der Erfindung zugrunde liegende Problem bei einer Vorrichtung der eingangs genannten Art gelöst durch ein auf dem abzulösenden Halbleiter-Wafer angeordnetes Trägermaterial, wobei das Trägermaterial zugleich auch als ein Lichteinkoppelmittel zum Erhöhen der numerischen Apertur und/oder zum Reduzieren von Reflexionsverlusten dient, und das Lichteinkoppelmittel als eine Folic ausgebildet ist.

Somit erfolgt das Separieren des Halbleiter-Wafers von dem Halbleiterkristall nicht auf rein mechanische Weise, sondern aufgrund eines optischen Verfahrens. Hierbei wird ein Laserstrahl in den Halbleiterkristall eingekoppelt und derart fokussiert, dass in der vorgegebenen Trennebene eine Schwachstelle durch den Laserstrahl erzeugt wird. In der Trennebene wird eine hinreichende Anzahl von nebeneinander liegenden und/oder einander überlappenden Schwachstellen erzeugt, so dass sich der Halbleiter-Wafer von dem Halbleiterkristall ablösen lässt. Der Laserstrahl wird derart fokussiert und, insbesondere aufgrund der Verwendung eines Pulslasers, zeitlich beschränkt, dass ein lediglich sehr kleines Volumen des Halbleiterkristalls geschädigt bzw. geschwächt wird. Hierbei verbleibt das Halbleitermaterial außerhalb des Fokus im Wesentlichen unverändert. Hierdurch ist eine deutlich höhere Oberflächenqualität an der Schnittfläche des Halbleiter-Wafers und des Halbleiterkristalls realisierbar. Zudem wird der Zeit- und Kostenaufwand für ein nachträgliches Polieren der Oberflächen deutlich reduziert oder sogar vollständig vermieden. Des Weiteren werden die Materialverluste, insbesondere im Bereich der Trennebene, deutlich vermindert. Hierdurch wird die Wirtschaftlichkeit bei der Herstellung von Halbleiter-Wafern erheblich erhöht. Insbesondere erlaubt das erfindungsgemäße Verfahren, dass ein dünner Halbleiter-Wafer von einem dickeren Halbleiter-Wafer separiert wird.

Vorzugsweise ist die Größe der Schwachstelle mittels einer Regulierung der zugeführten Strahlungsenergie des Laserstrahls und/oder einer Veränderung der numerischen Apertur der Optik für den Laserstrahl bestimmbar. Hierdurch lassen sich je nach Anforderung geeignete Schwachstellen erzeugen. Weiter können die Schwachstellen unter dem Einfluss einer Gasatmosphäre erzeugt werden, wobei Gasmoleküle und/oder Radikale mit Atomen reagieren, die aufgrund der Erzeugung der Schwachstellen entstehen und durch die Reaktion in einem gasförmigen Molekül gebunden sind. Damit lässt sich die Gefahr reduzieren, dass aufgrund der Erzeugung der Schwachstellen frei gewordenen Atome sich im Bereich der Trennebene wieder mit dem Halbleiterkristall und dem abzulösenden Halbleiter-Wafer verbinden und hierdurch die Separation behindern oder stören.

Gemäß der Erfindung wird der Laserstrahl in den Halbleiterkristall mittels eines Lichteinkoppelmittels zum Erhöhen der numerischen Apertur und/oder zum Reduzieren von Reflexionsverlusten eingekoppelt. Halbleitermaterialien wie beispielsweise Silizium weisen einen erheblich höheren Brechungsindex als beispielsweise Glas auf. Hierdurch besteht die Gefahr, dass ein erheblicher Anteil an dem einzukoppelnden Laserstrahl bereits an der Oberfläche des Halbleiterkristalls reflektiert wird. Dies wiederum kann dazu führen, dass die verbleibende Energie des eingekoppelten Laserstrahls nicht ausreicht, um den Halbleiterkristall im Bereich des Fokus hinreichend zu schwächen. Derartige Reflexionsverluste werden vermieden, wenn das Lichteinkoppelmittel vor dem Einkoppeln des Laserstrahls auf dem Halbleiterkristall aufgebracht wird. Gleichzeitig wird hierdurch die numerische Apertur erhöht. Aufgrund der somit möglichen schärferen Fokussierung kann die vorgegebene Tiefe der Trennebene und/oder der zu schwächende Bereich in dem Halbleiterkristall genauer eingestellt werden. Gemäß der Erfindung wird als das Lichteinkoppelmittel eine Folie eingesetzt. Bei der Verwendung eines als Folie ausgebildeten Lichteinkoppelmittels ist von Vorteil, dass ein Verschmutzen wie bei einer Immersionsflüssigkeit vermieden wird und die Handhabung deutlich verbessert wird. Das Lichteinkoppelmittel kann zu einem Brechungsindex des Halbleiterkristalls einen mindestens ähnlichen Brechungsindex aufweisen, wodurch die Lichteinkoppelung weiter verbessert wird. Zum Verbessern der Lichteinkoppelung kann auch eine einseitige oder doppelseitige einfache oder mehrfache Antireflexbeschichtung des als Folie ausgebildeten Lichteinkoppelmittels dienen.

Entsprechend einer weiteren Ausführungsform wird der Laserstrahl parallel oder schräg zu einer Flächennormalen des abzulösenden Halbleiter-Wafers und/oder der Trennebene, insbesondere durch den abzulösenden Halbleiter-Wafer, und/oder in der Ebene der Trennebene (13) in den Halbleiterkristall eingekoppelt. Somit ist es vorgesehen, den Laserstrahl durch den abzutrennenden Halbleiter-Wafer hindurch in den Halbleiterkristall einzukoppeln und/oder von der Seite unmittelbar in die Trennebene des Halbleiterkristalls einzubringen.

Vorzugsweise wird eine Optik zum Ausrichten und/oder Fokussieren des Laserstrahls auf den Halbleiterkristalls, insbesondere auf dem Lichteinkoppelmittel, aufgesetzt. Hierdurch wird die Lichteinkoppelung des Laserstrahls in den Halbleiterkristall weiter verbessert.

Nach einer weiteren Ausführungsform wird mittels der Schwachstellen eine Perforation, insbesondere in einer vorgegebenen Trennebene zum Ablösen des Halbleiter-Wafers, in dem Halbleiterkristall hergestellt. Eine derartige Perforation erlaubt ein einfaches, beispielsweise mechanisches, Abtrennen des Halbleiter-Wafers von dem Halbleiterkristall. Vorzugsweise wird der Halbleiter-Wafer entlang der Perforation mittels thermischer Spannungen, insbesondere mittels mindestens einem weiteren Laser und/oder einer Kühlung und/oder einer Aufheizung, von dem Halbleiterkristall abgelöst. Hierdurch wird die mechanische Beanspruchung des Halbleiter-Wafers während des Ablösens von dem Halbleiterkristall vermindert, wodurch die Gefahr einer Beschädigung des Halbleiter-Wafers und/oder Halbleiterkristalls reduziert wird. Entsprechend einer weiteren Ausführungsform werden die Schwachstellen, insbesondere die Schwachstellen der Perforation, zufällig oder in einem vorgegebenen Raster, vorzugsweise spiralförmig oder radial, in dem Halbleiterkristall erzeugt. Vor dem Erzeugen der Schwachstellen in der Trennebene wird demnach ausgewählt, in welcher Abfolge die einzelnen Schwachstellen in dem Halbleiterkristall erzeugt werden sollen. Hierbei wird das Raster vorzugsweise derartig gewählt, dass einerseits eine möglichst hohe Qualität für den abzulösenden Halbleiter-Wafer und andererseits eine möglichst hohe Produktionsrate hinsichtlich der Anzahl von abgelösten Halbleiter-Wafern von dem Halbleiterkristall pro Zeiteinheit gewährleistet ist.

Vorzugsweise werden Positionierungen und/oder Tiefenlagen des Fokus innerhalb des abzulösenden Halbleiter-Wafers und/oder dem Halbleiterkristall zum Erzeugen unterschiedlich positionierter Schwachstellen verändert und, insbesondere frei wählbar, eingestellt. Somit ist eine hohe Flexibilität und Anpassbarkeit gegeben. Hierbei kann beispielsweise die Tiefenlage der Schwachstellen durch eine Veränderung der Wellenlänge des Laserstrahls erzeugt werden. Nach einer Weiterbildung werden weitere Schwachstellen für das Herauslösen von Halbleiter-Chips aus dem Halbleiter-Wafer und/oder für eine Strukturierung und/oder Texturierung der Oberfläche des Halbleiterkristalls und/oder Halbleiter-Wafers erzeugt. Somit wird in einem Arbeitsschritt einerseits bereits das Herauslösen von Halbleiter-Chips aus dem abzulösenden Halbleiter-Wafer vorbereitet und andererseits der Halbleiter-Wafer von dem Halbleiterkristall abgelöst. Hierbei werden die weiteren Schwachstellen für das Herauslösen von Halbleiter-Chips vorzugsweise vor dem Erzeugen der Schwachstellen für das Ablösen des Halbleiter-Wafers in dem Halbleiterkristall erzeugt. Zudem ist es durch eine Veränderung der Positionierung und Tiefenlage des Fokus möglich, die Oberfläche des Halbleiter-Wafers derart zu texturieren, dass diese beispielweise für das Light-Trapping, insbesondere im Zusammenhang mit Dünnschichtsolarzellen, geeignet sind. Des Weiteren können derartig strukturierte Flächen in nachfolgenden Verarbeitungsschritten, beispielsweise bei einer Texturätzung, genutzt werden. Ferner kann zum Verändern und Einstellen der Tiefenlage des Fokus in dem Halbleiterkristall und/oder dem abzulösenden Halbleiter-Wafer eine In-line-Autofokusmessung und/oder eine geeigneten Dicke der Folie verwendet werden. Hierbei erfüllt die Folie eine Doppelfunktion, da diese einerseits als das Lichteinkoppelmittel zur Verbesserung der Lichteinkopplung und andererseits aufgrund einer geeigneten Dicke zum Einstellen der Tiefenlage des Fokus in dem Halbleiterkristall dient.

Nach einer weiteren Ausführungsform wird nach dem Einkoppeln des Laserstrahls in den Halbleiterkristall und/oder in den Halbleiter-Wafer ein Trägermaterial auf den abzulösenden Halbleiter-Wafer des Halbleiterkristalls aufgebracht. Vorzugsweise wird als Trägermaterial eine Folie, insbesondere eine Adhäsionsfolie, eingesetzt. Mittels eines solchen Trägermaterials wird das Abtrennen des Halbleiter-Wafers von dem Halbleiterkristall erheblich erleichtert und/oder besser kontrollierbar. Darüber hinaus wird die Verarbeitung der Halbleiter-Wafer für nachfolgende Bearbeitungsschritte erleichtert. Ferner können auf einer Folie aufgebrachte Wafer gegebenenfalls auf eine Rolle, insbesondere für die Lagerung und/oder den Transport, aufgerollt werden. Hierdurch stehen die Wafer auch einem kontinuierlich ablaufenden nachfolgenden Bearbeitungsprozess zur Verfügung. Weiter wird beispielsweise das, insbesondere sequenzielle, Belegen großer Flächen mit Halbleiterschichten ermöglicht. Das Trägermaterial kann zugleich auch als ein Lichteinkoppelmittel eingesetzt werden. Eine entsprechend ausgestaltete Folie kann somit bis zu drei Funktionen ausfüllen. Dabei dient die Folie als Lichteinkoppelmittel zum Verbessern der Lichteinkoppelung und Reduzierung von Reflexionsverlusten sowie zum Erhöhen der numerischen Apertur, zum Einstellen der Tiefenlage des Fokus mittels einer geeigneten Dicke der Folie und als Trägermaterial für den abzulösenden Halbleiter-Wafer.

Nach einer weiteren Ausführungsform werden flexible Halbleiter-Wafer mit einer Schichtdicke von weniger als 100 µm, bevorzugt weniger als 50 µm, besonders bevorzugt weniger als 10 µm, hergestellt. Derartig dünne Halbleiter-Wafer sind aufgrund des erfindungsgemäßen Verfahrens deutlich einfacher und mit erheblich geringeren Materialverlusten herstellbar. Weiter ist bei derartig dünnen Halbleiter-Wafern von Vorteil, dass diese flexible Eigenschaften annehmen. Hierdurch wird die weitere Verarbeitung deutlich vereinfacht. Nach einer Weiterbildung wird der flexible Halbleiter-Wafer, insbesondere beim Einkoppeln des Laserstrahls in der Ebene der Trennebene, in Abhängigkeit von den erzeugten Schwachstellen allmählich von dem Halbleiterkristall abgeschält. Aufgrund der flexiblen Eigenschaften von dünnen Halbleiter-Wafern lässt sich der Halbleiter-Wafer leicht von dem Halbleiterkristall abtrennen.

Vorzugsweise wird vor dem Ablösen des Halbleiter-Wafers eine integrierte Schaltung und/oder ein anderes Bauteil mindestens teilweise in den Halbleiter-Wafer eingebracht und/oder auf dem Halbleiter-Wafer aufgebracht. Somit ist es beispielsweise möglich, eine integrierte Schaltung und/oder ein anderes Bauteil beispielsweise mittels Hochtemperaturprozessen konventioneller Art ganz oder teilweise fertigzustellen. Erst hiernach erfolgt die Abtrennung des Halbleiter-Wafers von dem Halbleiterkristall. Demnach müssen beispielsweise Halbleiter-Chips, die auf einem als Folie ausgebildeten Trägermaterial angeordnet sind, nur noch mit Niedertemperaturprozessen nachbehandelt werden oder stehen gleich für eine Anwendung zur Verfügung.

Von besonderem Vorteil ist die Verwendung des erfindungsgemäßen Verfahrens und/oder der erfindungsgemäßen Vorrichtung zum Herstellen von dünnen, insbesondere flexiblen, Halbleiter-Wafern, vorzugsweise für Dünnschichtsolarzellen und/oder für Halbleiterschichten, insbesondere für großflächige Schichten, wie für E-paper, Folienfernseher oder dergleichen mehr.

Nachfolgend wird die Erfindung anhand von Figuren näher erläutert. Es zeigen:
- Fig. 1: eine erfindungsgemäße Vorrichtung in einem Längsschnitt,
- Fig. 2: eine Trennebene nach Fig. 1 im Querschnitt, und
- Fig. 3: ein Ablaufdiagramm eines erfindungsgemäßen Verfahrens.

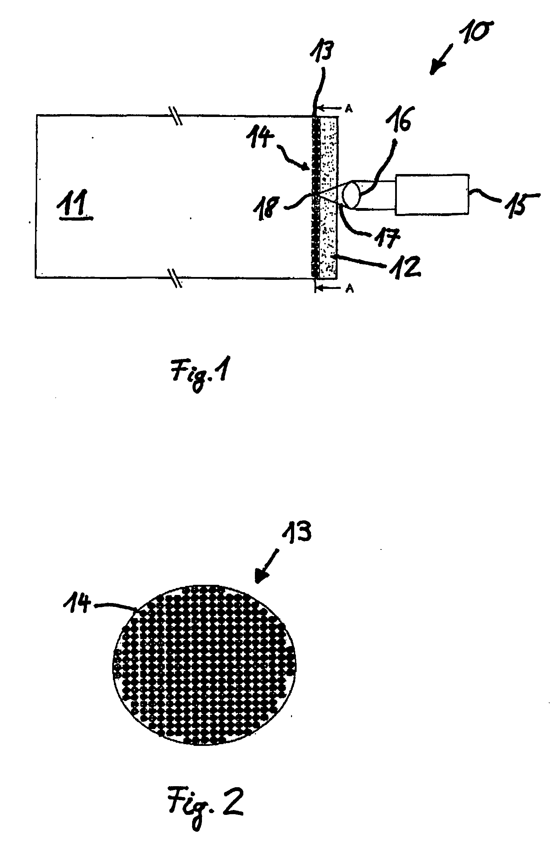

Fig. 1 zeigt einen Längsschnitt einer Vorrichtung 10 zum Separieren eines Halbleiter-Wafers 12 von einem Halbleiterkristall 11. Zwischen dem Halbleiterkristall 11 und dem Halbleiter-Wafer 12 ist eine Trennebene 13 angeordnet, die sich parallel zur Flächenausdehnung des Halbleiter-Wafers 12 erstreckt. In der Trennebene 13 sind nebeneinander liegend Schwachstellen 14 angeordnet.

Parallel zur Flächennormale des Halbleiter-Wafers 12 bzw. der Trennebene 13 ist ein Laser 15 angeordnet. Der Laser 15 ist in dem hier gezeigten Ausführungsbeispiel als ein Femtosekundenlaser ausgebildet. An dem dem Halbleiter-Wafer 12 zugewandten Ende des Lasers 15 ist eine Optik 16 angeordnet. Mittels des Lasers 15 wird ein Laserstrahl 17 erzeugt, der mittels der Optik 16 ausgerichtet und fokussiert wird. Hierbei erfolgt die Fokussierung derart, dass der Laserstrahl 17 in der Trennebene 13 in einem Fokus 18 fokussiert wird.

Fig. 2 zeigt einen Schnitt A-A durch die Trennebene 13 gemäß der Fig. 1. In dem hier gezeigten Ausführungsbeispiel sind die Schwachstellen 14 derart dicht nebeneinander angeordnet, dass sich die Außenumfangsflächen von jeweils nebeneinander liegenden Schwachstellen 14 in der Regel berühren. Hierdurch ist gewährleistet, dass der Großteil des Halbleitermaterials in der Trennebene 13 geschwächt wird und ein einfaches Ablösen des Halbleiter-Wafers 12 von dem Halbleiterkristall 11 gewährleistet ist.

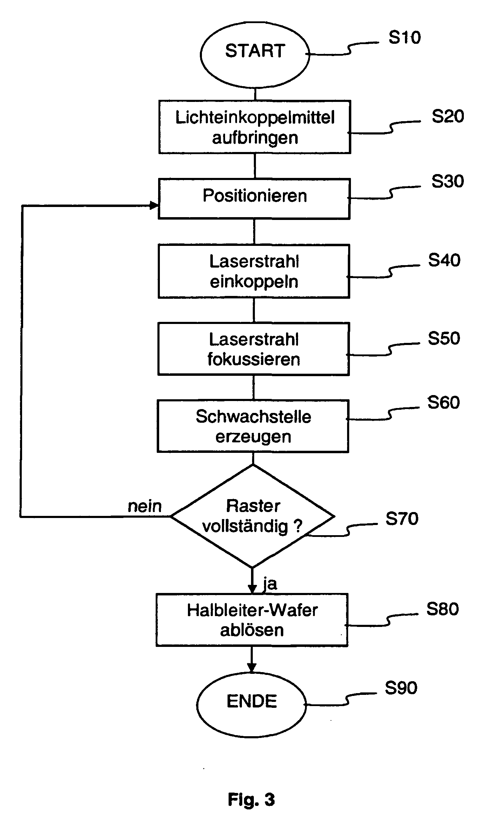

Fig. 3 zeigt ein schematisches Ablaufdiagramm eines erfindungsgemäßen Verfahrens. Nach dem Start des Verfahrens in einem Schritt S10 wird zunächst in einem Schritt S20 ein Lichteinkoppelmittel auf dem Halbleiterkristall 11 aufgebracht. Hierbei dient als das Lichteinkoppelmittel eine Immersionsflüssigkeit und/oder Folie, wodurch Reflexionsverluste deutlich reduziert und die numerische Apertur erhöht wird. Hiernach folgt in einem Schritt S30 eine Positionierung, um eine einzelne Schwachstelle 14 entsprechend eines vorgegebenen Rasters an einer hierfür vorgegeben Stelle in der Trennebene 13 zu erzeugen. Die Positionierung kann hierbei mittels einer Positioniereinrichtung erfolgen, die alternativ den Laserstrahl 17 mittels einer geeigneten Umlenkung, den Lasers 15 oder den Halbleiterkristalls 11 entsprechend des vorgegeben Rasters verschiebt und positioniert. In einem darauf folgendem Schritt S40 wird der Laserstrahl 17 in den Halbleiterkristall 11 eingekoppelt. Hierbei wird gemäß Fig. 1 die Laserstrahlung durch den ablösenden Halbleiter-Wafer 12 in das Halbleitermaterial in der Trennebene 13 eingebracht. Hierzu wird der Laserstrahl 17 in einem Schritt S50 in dem Fokus 18, welcher in der Trennebene 13 liegt, fokussiert. Aufgrund dieser Fokussierung des Laserstrahls 17 wird im Bereich des Fokus 18 in einem Schritt S60 eine Schwachstelle 14 in dem Halbleitermaterial der Trennebene 13 erzeugt.

Sodann erfolgt in einem Schritt S70 die Abfrage, ob das vorgegebene Raster zum Erzeugen der einzelnen Schwachstellen 14 vollständig durchfahren wurde. Ist dies nicht der Fall, erfolgt gemäß Schritt S30 entsprechend des vorgegebenen Rasters einer Positionierung, so dass die nächste zu erzeugende Schwachstelle 14 erzeugt werden kann. Nach der erfolgten Positionierung werden die Schritte S40 bis S70 erneut durchlaufen. Sofern im Schritt S70 festgestellt worden ist, dass sämtliche Schwachstellen 14 gemäß dem vorgegebenen Raster erzeugt worden sind, wird der Halbleiter-Wafer 12 in einem Schritt S80 von dem Halbleiterkristall 11 abgelöst und das Verfahren in einem Schritt S90 beendet.

Alternativ ist es möglich, dass vor dem Schritt S80 als ein weiterer Verfahrensschritt zunächst ein Trägermaterial auf der dem Haltleiterkristall 11 abgewandten Seite des Halbleiter-Wafers 12 aufgebracht wird. Das Aufbringen des Trägermaterials erfolgt gemäß der Erfindung unmittelbar nach dem Schritt S10. Gemäß der Erfindung hierzu dient ein als Folie ausgebildetes Lichteinkoppelmittel zugleich auch als Trägermaterial.

Mittels des erfindungsgemäßen Verfahrens und der erfindungsgemäßen Vorrichtung sind dünne Halbleiter-Wafer von einem Halbleiterkristall, wie beispielsweise einem Siliziumkristall, auf einfache Weise zu separieren. Hierbei ist von besonderem Vorteil, dass einerseits die Materialverluste aufgrund einer sehr dünnen Dicke der Trennebene deutlich reduziert werden und andererseits der Nachbearbeitungsbedarf, beispielsweise durch Polieren, für die Oberflächen des Halbleiter-Wafers 12 ebenfalls deutlich vermindert wird. Somit wird die Wirtschaftlichkeit bei der Herstellung von, insbesondere dünnen und großflächigen, Halbleiter-Wafern erheblich gesteigert.

### Bezugszeichenliste:

- 10: Vorrichtung
- 11: Halbleiterkristall
- 12: Halbleiter-Wafer
- 13: Trennebene
- 14: Schwachstelle
- 15: Laser
- 16: Optik
- 17: Laserstrahl
- 18: Fokus

- S10: Start
- S20: Lichteinkoppelmittel aufbringen
- S30: Positionieren
- S40: Laserstrahl einkoppeln
- S50: Laserstrahl fokussieren
- S60: Schwachstelle erzeugen
- S70: Raster vollständig?
- S80: Halbleiter-Wafer ablösen
- S90: Ende

## Patentansprüche

1. Verfahren zum Separieren eines, insbesondere dünnen und/oder großflächigen, Halbleiter-Wafers (12) von einem Halbleiterkristall (11), bei dem ein Laserstrahl (17) in den Halbleiterkristall (11) eingekoppelt wird, bei dem der Laserstrahl (17) in einer vorgegebenen Tiefe in dem Halbleiterkristall (11) in einem Fokus (18) fokussiert wird,
bei dem im Bereich des Fokus (18) in dem Halbleiterkristall (11) eine Schwachstelle (14) durch den Laserstrahl (17) erzeugt wird, und bei dem eine zum Ablösen des Halbleiter-Wafers (12) von dem Halbleiterkristall (11) hinreichende Anzahl von unterschiedlich positionierten Schwachstellen (14) in einer Trennebene (13) erzeugt wird, **dadurch gekennzeichnet, dass** vor dem Einkoppeln des Laserstrahls (17) in den Halbleiterkristall (11) und/oder den Halbleiter-Wafer (12) ein Trägermaterial auf den abzulösenden Halbleiter-Wafer (12) des Halbleiterkristalls (11) aufgebracht wird, wobei das zwischen dem Halbleiterkristall (11) und dem Laser (15) angeordnete Trägermaterial zugleich als ein Lichteinkoppelmittel zum Erhöhen der numerischen Apertur und/oder zum Reduzieren von Reflexionsverlusten eingesetzt wird, wobei als Lichteinkoppelmittel eine Folie eingesetzt wird.

2. Verfahren nach Anspruch 1, **dadurch gekennzeichnet, dass** als ein weiteres Lichteinkoppelmittel eine Immersionsflüssigkeit, insbesondere Öl oder Wasser, eingesetzt wird.

3. Verfahren nach einem der vorhergehenden Ansprüche, **dadurch gekennzeichnet, dass** der Laserstrahl (17) parallel oder schräg zu einer Flächennormalen des abzulösenden Halbleiter-Wafers (12) und/oder der Trennebene (13), insbesondere durch den abzulösenden Halbleiter-Wafer (12), und/oder in der Ebene der Trennebene (13) in den Halbleiterkristall (11) eingekoppelt wird.

4. Verfahren nach einem der vorhergehenden Ansprüche, **dadurch gekennzeichnet, dass** eine Optik (16) zum Ausrichten und/oder Fokussieren des Laserstrahls (17) auf den Halbleiterkristalls (11), insbesondere auf dem Lichteinkoppelmittel, aufgesetzt wird.

5. Verfahren nach einem der vorhergehenden Ansprüche, **dadurch gekennzeichnet, dass** mittels der Schwachstellen (14) eine Perforation, insbesondere in einer vorgegebenen Trennebene (13) zum Ablösen des Halbleiter-Wafers (12), in dem Halbleiterkristall (11) hergestellt wird, wobei vorzugsweise der Halbleiter-Wafer (12) entlang der Perforation mittels thermischer Spannungen, insbesondere mittels mindestens einem weiteren Laser und/oder einer Kühlung und/oder einer Aufheizung, von dem Halbleiterkristall (11) abgelöst wird.

6. Verfahren nach einem der vorhergehenden Ansprüche, **dadurch gekennzeichnet, dass** die Schwachstellen (14), insbesondere die Schwachstellen (14) der Perforation, zufällig oder in einem vorgegebenen Raster, vorzugsweise spiralförmig oder radial, in dem Halbleiterkristall (11) erzeugt werden.

7. Verfahren nach einem der vorhergehenden Ansprüche, **dadurch gekennzeichnet, dass** Positionierungen und/oder Tiefenlagen des Fokus (18) innerhalb des abzulösenden Halbleiter-Wafers (12) und/oder dem Halbleiterkristall (11) zum Erzeugen unterschiedlich positionierter Schwachstellen (14) verändert und, insbesondere frei wählbar, eingestellt werden, wobei vorzugsweise weitere Schwachstellen (14) für das Herauslösen von Halbleiter-Chips aus dem Halbleiter-Wafer (12) und/oder für eine Strukturierung und/oder Texturierung der Oberfläche des Halbleiterkristalls (11) und/oder Halbleiter-Wafers (12) erzeugt werden, und wobei insbesondere zum Verändern und Einstellen der Tiefenlage des Fokus (18) in dem Halbleiterkristall (11) und/oder dem abzulösenden Halbleiter-Wafer (12) eine In-line-Autofokusmessung und/oder eine geeignete Dicke der Folie verwendet werden.

8. Verfahren nach einem der vorhergehenden Ansprüche, **dadurch gekennzeichnet, dass** nach dem Einkoppeln des Laserstrahls (17) in den Halbleiterkristall (11) und/oder in den Halbleiter-Wafer (12) ein Trägermaterial auf den abzulösenden Halbleiter-Wafer (12) des Halbleiterkristalls (11) aufgebracht wird, wobei vorzugsweise als Trägermaterial eine Folie, insbesondere eine Adhäsionsfolie, eingesetzt wird, und wobei besonders bevorzugt das Trägermaterial als Lichteinkoppelmittel eingesetzt wird.

9. Verfahren nach einem der vorhergehenden Ansprüche, **dadurch gekennzeichnet, dass** flexible Halbleiter-Wafer (12) mit einer Schichtdicke von weniger als 100 µm, bevorzugt weniger als 50 µm, besonders bevorzugt weniger als 10 µm, hergestellt werden, wobei vorzugsweise der flexible Halbleiter-Wafer (12), insbesondere beim Einkoppeln des Laserstrahls (17) in der Ebene der Trennebene (13), in Abhängigkeit von den erzeugten Schwachstellen (14) allmählich von dem Halbleiterkristall (11) abgeschält wird.

10. Verfahren nach einem der vorhergehenden Ansprüche, **dadurch gekennzeichnet, dass** vor dem Ablösen des Halbleiter-Wafers (12) eine integrierte Schaltung und/oder ein anderes Bauteil mindestens teilweise in den Halbleiter-Wafer (12) eingebracht und/oder auf dem Halbleiter-Wafer (12) aufgebracht wird.

11. Vorrichtung zum Separieren eines, insbesondere dünnen und/oder großflächigen, Halbleiter-Wafers (12) von einem Halbleiterkristall (11) mit einem Laser (15) zum Erzeugen eines Laserstrahls (17), mit einer Fokussiereinrichtung (16) zum Fokussieren des Laserstrahls (17) in einem Fokus (18) in einer vorgegebenen Tiefe in dem Halbleiterkristall (11), und mit einer Positioniereinrichtung zum Positionieren des Laserstrahls (17) zum Erzeugen einer zum Ablösen des Halbleiter-Wafers (12) von dem Halbleiterkristall (11) hinreichenden Anzahl von Schwachstellen (14), **gekennzeichnet durch** ein auf dem abzulösenden Halbleiter-Wafer (12) anordnbares Trägermaterial, wobei das Trägermaterial zugleich auch als ein Lichteinkoppelmittel zum Erhöhen der numerischen Apertur und/oder zum Reduzieren von Reflexionsverlusten dient, und das Lichteinkoppelmittel als eine Folie ausgebildet ist.

12. Vorrichtung nach Anspruch 11, **dadurch gekennzeichnet, dass** an dem Halbleiterkristall (11) und/oder an dem Laser (15), insbesondere zwischen dem Halbleiterkristall (11) und dem Laser (15), ein Lichteinkoppelmittel zum Einkoppeln des Laserstrahls (17) in den Halbleiterkristall (11) und/oder in den abzulösenden Halbleiter-Wafer (12) angeordnet ist, wobei insbesondere das Lichteinkoppelmittel einen zu einem Brechungsindex des Halbleiterkristalls (11) mindestens ähnlichen Brechungsindex aufweist, und wobei besonders bevorzugt das als Folie ausgebildete Lichteinkoppelmittel eine einseitige oder doppelseitige einfache oder mehrfache Antireflexbeschichtung zum Reduzieren von Reflexionsverluste aufweist, vorzugsweise ist als ein weiteres Lichteinkoppelmittel eine Immersionsflüssigkeit, insbesondere ein Öl oder Wasser, vorgesehen.

13. Vorrichtung nach Anspruch 11 oder 12, **dadurch gekennzeichnet, dass** eine Optik (16) zum Ausrichten und/oder Fokussieren des Laserstrahls (17) auf dem Halbleiterkristall (11), insbesondere auf dem Lichteinkoppelmittel, aufgesetzt ist, wobei vorzugsweise die Tiefenlage des Fokus (18) in dem Halbleiterkristall (11) und/oder in dem abzulösenden Halbleiter-Wafer (12) zum Erzeugen unterschiedlich positionierter Schwachstellen (14), insbesondere zum Erzeugen einer Strukturierung und/oder Texturierung der Oberfläche des Halbleiterkristalls (11) und/oder Halbleiter-Wafers (12), mittels einer In-line-Autofokusmessung und/oder eine geeignete Dicke der Folie veränderbar ist.

14. Vorrichtung nach einem der Ansprüche 11 bis 13 **dadurch gekennzeichnet, dass** der Laser (15) als ein Pulslaser, insbesondere ein Femtosekundenlaser, ausgebildet ist.

15. Verwendung eines Verfahrens nach einem der Ansprüche 1 bis 10 und/oder einer Vorrichtung nach einem der Ansprüche 11 bis 14 zum Herstellen von dünnen, insbesondere flexiblen, Halbleiter-Wafern (12), vorzugsweise für Dünnschichtsolarzellen und/oder für Halbleiterschichten, insbesondere für großflächige Schichten, wie für E-paper, Folienfernseher oder dergleichen mehr.

## Claims

1. Method for separating a particularly thin and/or large surface area semiconductor wafer (12) from a semiconductor crystal (11), in which method a laser beam (17) is coupled into the semiconductor crystal (11), in which method the laser beam (17) is focussed in a predefined depth in the semiconductor crystal (11) in a focal point (18), in which method a weak point (14) is created by the laser beam (17) in the region of the focal point (18) in the semiconductor crystal (11), and in which method a sufficient number of differently positioned weak points (14) in the separation plane (13) is created in order to remove the semiconductor wafer (12) from the semiconductor crystal (11), **characterised in that** prior to coupling the laser beam (17) into the semiconductor crystal (11) and/or the semiconductor wafer (12) a substrate is deposited onto the semiconductor wafer (12) to be removed from the semiconductor crystal (11), wherein the substrate arranged between the semiconductor crystal (11) and the laser (15) is employed at the same time as a light coupling means for increasing the numerical aperture and/or for reducing reflection losses, wherein a film is employed as the light coupling means.

2. Method according to claim 1, **characterised in that** an immersion fluid, in particular oil or water, is employed as an additional light coupling means.

3. Method according to one of the preceding claims, **characterised in that** the laser beam (17) is coupled parallel or transversely to a surface normal of the semiconductor wafer (12) to be detached and/or to the separation plane (13), in particular through the semiconductor wafer (12) to be detached, and/or is coupled in the plane of the separation plane (13) into the semiconductor crystal (11).

4. Method according to one of the preceding claims, **characterised in that** optics (16) for aligning and/or focussing the laser beam (17) is superposed on the semiconductor crystal (11), in particular on the light coupling means.

5. Method according to one of the preceding claims, **characterised in that** for detaching the semiconductor wafer (12) a perforation is produced by means of the weak points (14) in the semiconductor crystal (11), in particular in a predefined separation plane (13), wherein the semiconductor wafer (12) is preferably detached from the semiconductor crystal (11) along the perforation by means of thermal stresses, in particular by means of at least one additional laser and/or by cooling and/or heating.

6. Method according to one of the preceding claims, **characterised in that** the weak points (14), in particular the weak points (14) of the perforation, are produced randomly or in a predefined pattern, preferably spirally or radially, in the semiconductor crystal (11).

7. Method according to one of the preceding claims, **characterised in that** the position and/or depth of the focal point (18) are adjusted within the semiconductor wafer (12) to be detached and/or in the semiconductor crystal (11) for producing differently positioned weak points (14) and in particular changed in a freely selectable manner, wherein further weak points (14) are preferably produced for detaching the semiconductor chip from the semiconductor wafer (12) and/or for structuring and/or texturing the surface of the semiconductor crystal (11) and/or semiconductor wafer (12), and wherein an in-line autofocus measurement and/or a suitable thickness of the film are used in particular for changing and adjusting the depth of the focal point (18) in the semiconductor crystal (11) and/or in the semiconductor wafer (12) to be detached.

8. Method according to one of the preceding claims, **characterised in that** after coupling the laser beam (17) into the semiconductor crystal (11) and/or into the semiconductor wafer (12) a substrate is applied onto the semiconductor wafer (12) to be detached from the semiconductor crystal (11), wherein a film, in particular an adhesive film, is preferably employed as the substrate, and wherein the substrate is particularly preferably employed as the light coupling means.

9. Method according to one of the preceding claims, **characterised in that** flexible semiconductor wafers (12) are produced with a layer thickness of less than 100 µm, preferably less than 50 µm, particularly preferably less than 10 µm, wherein the flexible semiconductor wafer (12), in particular when coupling the laser beam (17) in the plane of the separation plane (13), is gradually peeled off from the semiconductor crystal (11) as a result of the produced weak points (14).

10. Method according to one of the preceding claims, **characterised in that** before detaching the semiconductor wafer (12) an integrated circuit and/or another component is at least partially introduced into the semiconductor wafer (12) and/or deposited on the semiconductor wafer (12).

11. Device for separating a particularly thin and/or large surface area semiconductor wafer (12) from a semiconductor crystal (11) with a laser (15) for producing a laser beam (17), with a focussing mechanism (16) for focussing the laser beam (17) in a focal point (18) at a predefined depth in the semiconductor crystal (11), and with a positioning mechanism for positioning the laser beam (17) for producing a sufficient number of weak points (14) for detaching the semiconductor wafer (12) from the semiconductor crystal (11), **characterised by** a substrate arranged on the semiconductor wafer (12) to be removed, wherein the substrate also serves at the same time as a light coupling means for increasing the numerical aperture and/or for reducing reflection losses, and the light coupling means is designed as a film.

12. Device according to claim 11, **characterised in that** a light coupling means for coupling the laser beam (17) into the semiconductor crystal (11) and/or into the semiconductor wafer (12) to be removed is arranged on the semiconductor crystal (11) and/or on the laser (15), in particular
between the semiconductor crystal (11) and the laser (15), wherein in particular the light coupling means has a refractive index that is at least similar to a refractive index of the semiconductor crystal (11), and wherein the light coupling means that is designed as a film particularly preferably has a one sided or double sided single or multiple anti-reflective coating for reducing reflection losses, preferably an immersion liquid, in particular an oil or water, is provided as an additional light coupling means.

13. Device according to claim 11 or 12, **characterised in that** optics (16) for aligning and/or focussing the laser beam (17) is superposed on the semiconductor crystal (11), in particular on the light coupling means, wherein the depth of the focal point (18) in the semiconductor crystal (11) and/or in the semiconductor wafer (12) to be detached is preferably modifiable by means of an in-line auto-focus measurement and/or by a suitable thickness of the film so as to produce differently positioned weak points (14), in particular to produce a structuring and/or texturing of the surface of the semiconductor crystal (11) and/or of the semiconductor wafer (12).

14. Device according to one of claims 11 to 13, **characterised in that** the laser (15) is designed as a pulsed laser, in particular a femtosecond laser.

15. Use of a method according to one of claims 1 to 10 and/or of a device according to one of claims 11 to 14 for the production of thin, in particular flexible, semiconductor wafers (12), preferably for thin layer solar cells and/or for semiconductor layers, in particular for large surface area layers, such as for e-paper, film televisions or more of the like.

## Revendications

1. Procédé de séparation d'une galette semi-conductrice (12), en particulier une galette mince et/ou à une grande surface, d'un cristal semi-conducteur (11), dans lequel un rayon laser (17) est injecté dans ledit cristal semi-conducteur (11), dans lequel ledit rayon laser (17) est focalisé à une profondeur prédéterminée dans ledit cristal semi-conducteur (11), dans un foyer (18), auquel un point faible (14) est créé par ledit rayon laser (17) dans la région dudit foyer (18) dans ledit cristal semi-conducteur (11), et dans lequel un nombre de points faibles (14) aux différentes positions est créé dans un plan de séparation (13), qui est suffisant pour le décollement de ladite galette semi-conductrice (12) dudit cristal semi-conducteur (11), **caractérisé en ce qu'**avant l'injection dudit rayon laser dans ledit cristal semi-conducteur (11) et/ou ladite galette semi-conductrice (12), un matériau de base est appliqué sur ladite galette semi-conductrice (12) à décoller dudit cristal semi-conducteur (11), audit matériau de base disposé entre ledit cristal semi-conducteur (11) et ledit laser (15) étant utilisé, en même temps, en tant que moyen d'injection lumineuse afin d'augmenter l'ouverture numérique et/ou afin de réduire des pertes en réflexion, à une feuille servant en tant que moyen d'injection lumineuse.

2. Procédé selon la revendication 1, **caractérisé en ce qu'**un liquide d'immersion, en particulier de l'huile ou de l'eau, est utilisé en tant que moyen d'injection lumineuse supplémentaire.

3. Procédé selon une quelconque des revendications précédentes, **caractérisé en ce que** ledit rayon laser (17) est injecté en parallèle ou en biais relativement à une normale de surface de ladite galette semi-conductrice (12) à décoller et/ou dudit plan de séparation (13), en particulier à travers ladite galette semi-conductrice (12) à décoller et/ou dans le plan dudit plan de séparation (13) dudit cristal semi-conducteur (11).

4. Procédé selon une quelconque des revendications précédentes, **caractérisé en ce qu'**un système optique (16) est posé sur ledit cristal semi-conducteur (11), en particulier sur ledit moyen d'injection lumineuse, afin d'aligner et/ou focaliser ledit rayon laser (17).

5. Procédé selon une quelconque des revendications précédentes, **caractérisé en ce qu'**une perforation est formée moyennant desdits points faibles (14), en particulier dans un plan de séparation prédéterminé (13), afin de décoller ladite galette semi-conductrice (12) dans ledit cristal semi-conducteur (11), de préférence en décollant ladite galette conductrice (12) le long de ladite perforation dudit cristal semi-conducteur (11) moyennant des contraintes thermiques, en particulier moyennant au moins un laser additionnel et/ou d'un système de refroidissement et/ou d'un système de chauffage.

6. Procédé selon une quelconque des revendications précédentes, **caractérisé en ce que** lesdits points faibles (14), en particulier les points faibles (14) de la perforation, sont créés de manière aléatoire ou dans une matrice prédéterminée, de préférence en spires ou de forme radiale, dans ledit cristal semi-conducteur (11).

7. Procédé selon une quelconque des revendications précédentes, **caractérisé en ce que** des positionnements et/ou positions en profondeur dudit foyer (18) à l'intérieur de ladite galette semi-conductrice (12) à décoller sont variés et ajustés, en particulier à sélection librement discrétionnaire, en créant, de préférence, des autres points faibles (14) pour le détachement des tranches de puces semi-conductrices de ladite galette semi-conductrice (12) et/ou pour la formation d'une structure ou d'une texture dans la surface dudit cristal semi-conducteur (11) et/ou de ladite galette semi-conductrice (12), et en utilisant, en particulier, une mesure autofocus en ligne, et/ou une épaisseur appropriée de feuille variable afin de modifier et ajuster la position en profondeur dudit foyer (18) dans ledit cristal semi-conducteur (11) et/ou dans ladite galette semi-conductrice (12) à décoller.

8. Procédé une quelconque des revendications précédentes, **caractérisé en ce qu'**après l'injection dudit rayon laser (17) dans ledit cristal semi-conducteur (11) et/ou dans ladite galette semi-conductrice (12), un matériau de base est appliqué sur ladite galette semi-conductrice (12) à décoller dudit cristal semi-conducteur (11), dans lequel une feuille, en particulier une feuille adhésive, est utilisée, de préférence, en tant que matériau de base, et dans lequel ledit matériau de base est utilisé en tant que moyen d'injection lumineuse de manière particulièrement préférée.

9. Procédé selon une quelconque des revendications précédentes, **caractérisé en ce qu'**on produit des galettes semi-conductrices flexibles (12) à une épaisseur de couche de moins de 100 µm, préférablement de moins de 50 µm, et de manière particulièrement préférée de moins de 10 µm, dans lequel, de préférence, ladite galette semi-conductrice flexible (12) est exfoliée graduellement dudit cristal semi-conducteur (11) en particulier au temps d'injection dudit rayon laser (17) dans le plan dudit plan de séparation (13), en fonction des points faibles créés (14).

10. Procédé selon une quelconque des revendications précédentes, **caractérisé en ce qu'**avant le détachement de ladite galette semi-conductrice (12) un circuit intégré et/ou un autres composant est introduit, au moins en partie, dans ladite galette semi-conductrice (12) et/ou appliqué sur ladite galette semi-conductrice (12).

11. Dispositif de séparation d'une galette semi-conductrice (12), en particulier une galette mince et/ou à une grande surface, d'un cristal semi-conducteur (11) moyennant un laser (15) pour la génération d'un rayon laser (17), comprenant un moyen de focalisation (16) afin de focaliser ledit rayon laser (17) dans un foyer (18) à une profondeur prédéterminée dans ledit cristal semi-conducteur (11), et un moyen de positionnement afin de positionner ledit rayon laser (17) pour la formation d'un nombre de points faibles, qui est suffisant pour le décollement de ladite galette semi-conductrice (12) dudit cristal semi-conducteur (11), **caractérisé par** un matériau de base apte à être déposé sur ladite galette semi-conductrice (12) à décoller, audit matériau de bas étant conçu en même temps aussi en tant qu'un moyen d'injection lumineuse afin d'augmenter l'ouverture numérique et/ou afin de réduire des pertes en réflexion, et audit moyen d'injection lumineuse étant conçu sous forme d'une feuille.

12. Dispositif selon la revendication 11, **caractérisé en ce qu'**un moyen d'injection lumineuse et disposé audit cristal semi-conducteur (11) et/ou audit laser (15), en particulier entre ledit cristal semi-conducteur (11) et ledit laser (15), afin d'injecter ledit rayon laser (17) dans ledit cristal semi-conducteur (11) et/ou dans ladite galette semi-conductrice (12) à décoller, dans lequel, en particulier, ledit moyen d'injection lumineuse présente un indice de réfraction qui st au moins similaire à l'indice de réfraction dudit cristal semi-conducteur (11), et dans lequel, de manière particulièrement préférée, ledit moyen d'injection lumineuse conçu sous forme d'une feuille comprend un revêtement anti-réflexion simple ou multiple unilatéral ou recto/verso afin de réduire des pertes en réflexion, et que, de préférence, un liquide d'immersion, en particulier de l'huile ou de l'eau, est pourvu en tant que moyen d'injection lumineuse supplémentaire.

13. Dispositif selon la revendication 11 ou 12, **caractérisé en ce qu'**un système optique (16) est posé sur ledit cristal semi-conducteur (11), en particulier sur ledit moyen d'injection lumineuse, afin d'aligner et/ou focaliser ledit rayon laser (17), de préférence à la position en profondeur dudit foyer (18) dans ledit cristal semi-conducteur (11) et/ou dans ladite galette semi-conductrice (12) à décoller étant variable afin de créer des points faibles (14) aux positions différentes, en particulier afin de créer une structure ou texture dans la surface dudit cristal semi-conducteur (11) et/ou de ladite galette semi-conductrice (12) moyennant une mesure autofocus en ligne, et/ou à une épaisseur appropriée de feuille variable.

14. Dispositif selon une quelconque des revendications 11 à 13, **caractérisé en ce que** ledit laser (15) et configuré sous forme d'un laser à impulsions, en particulier un laser femto secondes.

15. Application d'un procédé selon une quelconque des revendications 1 à 10 et/ou utilisation d'un dispositif selon une quelconque des revendications 11 à 14, pour la production des galettes semi-conductrices (12) minces, en particulier flexibles, de préférence pour des cellules solaires à couche mince et/ou des couches semi-conductrices, en particulier pour des couches à grande aire comme le papier électrique, des postes récepteurs de télévision en feuille ou des autres choses similaires.
